# EUROPÄISCHE PATENTSCHRIFT

(11) **EP 3 019 770 B1**
(45) Veröffentlichungstag und Bekanntmachung des Hinweises auf die Patenterteilung: **19.12.2018**
(21) Anmeldenummer: 14734015.2
(22) Anmeldetag: 06.06.2014
(51) Int. Cl.: F16F 15/26

(54) **ANTRIEB MIT EINER KOLBENMASCHINE UND EINE FÜR EINEN SOLCHEN ANTRIEB BESTIMMTE EINRICHTUNG SOWIE DIE VERWENDUNG EINER SOLCHEN EINRICHTUNG ZUM AUSGLEICH VON WECHSELMOMENTEN**
DRIVE HAVING A PISTON MACHINE AND A DEVICE PROVIDED FOR SUCH A DRIVE, AND THE USE OF SUCH A DEVICE FOR COMPENSATING ALTERNATING TORQUES
ENTRAÎNEMENT POURVU D'UN MOTEUR À PISTON ET DISPOSITIF PRÉVU POUR UN TEL ENTRAÎNEMENT, ET UTILISATION D'UN TEL DISPOSITIF POUR LA COMPENSATION DE COUPLES ALTERNANTS

(30) Priorität: 08.07.2013 DE 102013213358
(43) Veröffentlichungstag der Anmeldung: 18.05.2016
(73) Patentinhaber: Volkswagen Aktiengesellschaft, 38440 Wolfsburg (DE)
(72) Erfinder: REINHARDT, Michael, 29365 Bokel (DE); WESTPHAL, Christian, 38527 Meine (DE)
(86) Internationale Anmeldenummer: PCT/EP2014/061867
(87) Internationale Veröffentlichungsnummer: WO 2015/003860

(56) Entgegenhaltungen:
- DE-A1-102008 027 017
- DE-A1-102010 046 481
- DE-A1-102011 088 215
- US-A- 4 489 683
- GRUBER G ET AL: "Integriertes Ausgleichswellensystem des neuen Vierzylinder-Dieselmotors von BMW", MTZ MOTORTECHNISCHE ZEITSCHRIFT, VIEWEG VERLAG, WIESBADEN, DE, Bd. 69, Nr. 6, 1. Juni 2008 (2008-06-01), Seiten 518-524, XP001518700, ISSN: 0024-8525

## Beschreibung

Die Erfindung betrifft einen eine insbesondere als Brennkraftmaschine ausgeführte Kolbenmaschine umfassenden Antrieb mit zwei Kurbelwellen und mit zumindest einer mittels eines Planetengetriebes umfassend ein Sonnenrad, ein Hohlrad sowie zumindest ein Planetenrad antreibbaren Ausgleichswelle der Kolbenmaschine. Weiterhin betrifft die Erfindung die Verwendung einer für einen Antrieb bestimmten Einrichtung zum Antreiben mehrerer Ausgleichswellen zum Ausgleich von Wechselmomenten.

Ein solcher mit Ausgleichswellen ausgestatteter Antrieb wird in der Praxis bereits vielfach eingesetzt und zählt daher bereits aufgrund offenkundiger Vorbenutzung zum Stand der Technik.

Bekanntlich treten beim Betrieb von Hubkolbenmaschinen freie Kräfte und Momente auf, die besonders durch die hin- und hergehenden Teile der Kurbelwellenmaschine, wie Kolben, Pleuelstange und dgl. verursacht sind und die je nach Art der Maschine sowie nach Zahl und Anordnung der Kurbelkröpfungen der Kurbelwelle in mehr oder weniger großem Maße unausgeglichen sind und damit das Laufverhalten und die Laufruhe der Hubkolbenmaschine wesentlich beeinflussen.

Bekannte Ausgleichsmaßnahmen dienen dazu, die freien Massenkräfte bzw. freien Massenmomente um die Quer- und Hochachse der Kurbelwellenmaschine unter Verwendung von umlaufenden Gegengewichten bzw. Gegengewichtspaaren auszugleichen.

So ist beispielsweise eine als Lancester-Ausgleich bezeichnete Einrichtung zum Ausgleich der Massenkräfte II. Ordnung an Kurbelwellenmaschinen, insbesondere an Vierzylinder-Viertakt-Reihenmotoren, bekannt, bei der zwei mit exzentrisch angeordneten Gegengewichten versehene, parallel zur Kurbelwelle im Kurbelgehäuse angeordnete Nebenwellen in zueinander entgegengesetzter Richtung mit doppelter Kurbelwellendrehzahl umlaufen.

Bei derartigen Hubkolben-Kurbelwellenmaschinen treten infolge der in ihnen wirksamen, über den Arbeitstakt veränderlichen Gas- und Massenkräfte auch Wechselmomente um die Längsachse der Kurbelwellenmaschine auf. Während im unteren Drehzahl- und Lastbereich die Gaskräfte für das Entstehen solcher Wechselmomente verantwortlich sind, die beispielsweise auch zu dem bei Diesel-Brennkraftmaschinen auftretenden, bekannten Dieselschütteln im Leerlauf führen, zeigen sich in oberen Drehzahl- und Lastbereichen Wechselmomente infolge von veränderlichen Massenkräften.

In der Praxis dienen eine oder mehrere Ausgleichswellen dem Ausgleich bzw. der Tilgung von Schwingungen, die infolge der Hubbewegung der Kolben und Pleuel im Betrieb der Kolbenmaschine sowie infolge des ungleichförmigen Übertragungsverhaltens des Kurbeltriebs als Massenkräfte auftreten. Die Massenkräfte der oszillierenden Massen des Kurbeltriebs werden beispielsweise durch den Einsatz von Ausgleichswellen wirksam reduziert, auf denen entsprechende Ausgleichsunwuchten mit doppelter Kurbelwellen-Drehzahl umlaufen.

Aus der DE 37 20 559 C2 ist eine Einrichtung zum Ausgleich von durch Gas- oder Massenkräfte erzeugten Wechselmomenten um die Längsachse von Hubkolben-Kurbelwellenmaschinen bekannt. Um einen nahezu vollständigen Ausgleich dieser Momente zu erzeugen, wird der Ausgleich dieser Wechselmomente durch wenigstens eine in einem festen Drehwinkelverhältnis zur Kurbelwelle und gegenläufig zu dieser rotierend angetriebenen Ausgleichsmasse erzielt, die den von der Hubkolben-Kurbelwellenmaschine erzeugten Wechselmomenten entgegengerichtete veränderliche Momente erzeugt. Um einen vollständigen Ausgleich dieser Wechselmomente zu erreichen, soll das Trägheitsmoment dieser Ausgleichsmassen im Wesentlichen dem Trägheitsmoment der auf der Kurbelwelle angeordneten Schwungmassen, multipliziert mit dem reziproken Wert des Drehzahlübersetzungsverhältnisses zwischen der Ausgleichsmasse und der Kurbelwelle, entsprechen. Hierbei wird die Ausgleichsmasse von der Kurbelwelle über ein eine umfangsspielfreie Drehmomentübertragung bewirkendes Zahnradgetriebe angetrieben. Der wesentliche Grundgedanke der Einrichtung besteht darin, die von der Hubkolben-Kurbelwellenmaschine erzeugten Wechselmomente durch entsprechende entgegengerichtete Wechselmomente einer Ausgleichsmasse zu kompensieren, indem diese Ausgleichsmasse gegenläufig zur Kurbelwelle, aber infolge der Kopplung der Drehwinkel mit dem gleichen Drehzahlverhalten angetrieben wird.

Gemäß der DE 602 25 009 T2 ist eine Brennkraftmaschine mit einer Kurbelwelle und einer Ausgleichswelle ausgestattet, die mit der Kurbelwelle derart verbunden ist, dass diese im Betrieb mit der gleichen Geschwindigkeit wie die Kurbelwelle, jedoch in entgegengesetzter Richtung rotiert. Die Ausgleichswelle trägt gegeneinander versetzte außermittige Gewichte an ihren Enden. Weiterhin ist eine Startergenerator-Einheit mit einem Rotor vorgesehen, der um die Achse der Ausgleichswelle rotiert und mit der Ausgleichswelle mittels eines Übersetzungsgetriebes verbunden ist, sodass der Rotor in die gleiche Richtung wie die Ausgleichswelle rotiert, jedoch mit einer wesentlich höheren Geschwindigkeit. Vorzugsweise ist das Übersetzungsgetriebe ein Planetengetriebe. Wenn eine maximale Beschleunigung benötigt wird, kann die Startergenerator-Einheit als Antrieb dienen und Energie zur Ausgleichswelle und somit zur Kurbelwelle liefern.

Die DE 10 2010 046 481 A1 beschreibt eine Ausgleichswelle, die im Inneren der Nockenwelle angeordnet ist. Zum Antrieb dient ein Planetengetriebe, dessen Sonnenrad direkt mit der Ausgleichswelle verbunden ist und die Ausgleichswelle gegenläufig zur Kurbelwelle und parallel zu dieser antreibt. Bei einer anderen Variante wird eine Ausgleichsmasse von einem Planetengetriebe angetrieben, welches eine Kurbelwelle mit einer Nockenwelle verbindet. Das Hohlrad hat hierzu eine Außenverzahnung, in die ein Ritzel der Kurbelwelle und gegebenenfalls einer Kraftstoffpumpe eingreift, und eine Innenverzahnung, die mit den Planetenrädern kämmt. Das Hohlrad bildet dabei das Antriebszahnrad des Planetengetriebes.

Aus Gruber et. al, "Integriertes Ausgleichswellensystem des neuen Vierzylinder-Dieselmotors von BMW", MTZ Motortechnische Zeitschrift, Vieweg Verlag Wiesbaden, DE, Bd. 69, Nr. 6, 1. Juni 2008 (2008-06-01), Seiten 518-524, XP-001518700 ist ein eine insbesondere als Brennkraftmaschine ausgeführte Kolbenmaschine umfasender Antrieb mit einer Kurbelwelle und mit zumindest zwei mittels eines Getriebes umfassend ein Zentralrad sowie zumindest ein weiteres Zahnrad antreibbaren Ausgleichswellen der Kolbenmaschine bekannt, wobei die Kurbelwelle mit dem Zentralrad verbunden ist und wobei zumindest eine Ausgleichswelle mittels zumindest eines weiteren Zahnrads durch die Kurbelwelle antreibbar ausgeführt ist. Ein Planetengetriebe ist hieraus nicht bekannt.

Aus DE 10 2008 027 017 A1 ist bekannt, ein zwischen Kurbelwelle und Getriebe angeordnetes Schwungrad als Planetengetriebe auszubilden. Dabei ist die Kurbelwelle mit einem Sonnenrad verbunden, welches über Planetenräder mit einem innenverzahnten Hohlrad verbunden ist. Die Anbindung von Ausgleichwellen ist aus diesem Dokument nicht bekannt.

Darüber hinaus kommt es bei Kolbenmaschinen durch den in verschiedene Takte aufgeteilten Prozess an der Kurbelwelle zu einer Drehzahl- und Momentenpulsation. Diese sogenannte Drehungleichförmigkeit ist die Ursache für unerwünschte Torsions-Schwingungen innerhalb des Antriebs.

Die DE 195 17 605 C2 betrifft eine Einrichtung zum Ausgleich von Wechselmomenten und von Schwingungen im Antriebsstrang eines Kraftfahrzeugs, bei der eine Schwungmasse als Ausgleichsdrehträgheit für die durch Gas- oder Massenkräfte erzeugten Wechselmomente um die Längsachse der Kurbelwelle dient, die gegenläufig zur Drehrichtung der Kurbelwelle angetrieben wird. Hier ist die Kurbelwelle mit einem Hohlrad mit einer Innenverzahnung ausgestattet, in die die Verzahnung von gehäusefest gelagerten Planetenrädern greift. Diese Planetenräder kämmen mit ihrer Außenverzahnung mit einem Zahnkranz der Schwungmasse, die als Sonnenrad ausgebildet ist und die über Lagerkörper auf der Kurbelwelle der Brennkraftmaschine gelagert sitzt. Hierdurch erfährt die Schwungmasse einen Drehsinn entgegengesetzt zu dem der Kurbelwelle. Auf diese Weise sollen sich die durch die Drehungleichförmigkeiten erzeugten Wechselmomente kompensieren lassen.

Die DE 197 04 786 C1 betrifft einen konstruktiv sehr ähnlichen Aufbau einer derartigen Einrichtung zum Ausgleich von Wechselmomenten und von Schwingungen. Dabei ist die Schwungmasse als Elektromaschinenrotor ausgeführt. Die Elektromaschine kann sowohl als Motor zum Antrieb der Schwungmasse als auch zum Starten einer Brennkraftmaschine des Kraftfahrzeugs oder als Generator zur Batterieladung oder Bordnetzversorgung genutzt werden. Bei hinreichender Leistung der Elektromaschine ist durch Schließen der Anfahrkupplung auch ein Elektrofahrbetrieb des Kraftfahrzeugs möglich.

Als nachteilig erweist sich in der Praxis der konstruktive Aufwand, welcher zur effizienten Schwingungstilgung bzw. Schwingungsminimierung mittels der rotierenden Ausgleichsmassen einerseits und der rotierenden Trägheitsmomente andererseits erforderlich ist.

Vor diesem Hintergrund liegt der Erfindung die Aufgabe zugrunde, den Aufwand für den Ausgleich bzw. die Reduzierung der Wechselmomente einerseits und der Massenkräfte andererseits mittels zumindest einer Ausgleichswelle zu reduzieren.

Diese Aufgabe wird gelöst mit einem Antriebsstrang gemäß den Merkmalen der Patentansprüche 1 und 9. Die Unteransprüche betreffen besonders zweckmäßige Weiterbildungen der Erfindung.

Erfindungsgemäß ist also ein Antrieb vorgesehen, bei dem die Kurbelwelle mit dem Sonnenrad verbunden ist und bei dem zumindest zwei Ausgleichswellen mittels zumindest eines Planetenrads durch die Kurbelwelle antreibbar ausgeführt ist. Hierdurch wird in überraschend einfacher Weise der Antrieb der Ausgleichswelle durch die Kurbelwelle realisiert, indem die Ausgleichswelle durch das Planetenrad angetrieben wird. Da das Planetenrad lediglich um seine eigene Achse rotationsbeweglich antreibbar ist und dementsprechend bei der Rotation der Kurbelwelle das Hohlrad in Gegenrichtung rotiert, dient dieses zugleich dem Ausgleich bzw. der Reduzierung von Wechselmomenten und als Antrieb der Ausgleichswelle für die im Betrieb auftretenden Massenkräfte. Zugleich wird dadurch ein äußerst kompakter Aufbau des zum Antrieb der Ausgleichswelle erforderlichen Getriebes realisierbar. Außerdem gestattet das Hohlrad mit seiner Innenverzahnung die Anordnung weiterer Ausgleichswellen, die hierzu lediglich mit einem jeweiligen Planetenrad verbunden werden müssen, wobei grundsätzlich nicht ausgeschlossen ist, dass mehrere Ausgleichswellen durch dasselbe Planetenrad angetrieben werden. Dabei lässt sich das Planetengetriebe problemlos konstruktiv so aufbauen, dass auftretende Kräfte ausgeglichen und insbesondere unerwünschte asymmetrische Kraft- oder Masseverhältnisse vermieden werden.

Das Hohlrad ist mit einer Innenverzahnung für ein die erste Ausgleichswelle antreibendes Planetenrad und mit einer Außenverzahnung für ein die zweite Ausgleichswelle antreibendes Zahnrad ausgestattet. Hierdurch wird in überraschend einfacher Weise die Drehrichtung der Ausgleichswelle allein dadurch bestimmt, ob das Planetenrad bzw. Zahnrad der jeweiligen Ausgleichswelle mit der Innenverzahnung oder der Außenverzahnung kämmend angeordnet wird. Obwohl das in die Außenverzahnung eingreifende Zahnrad nicht als Planetenrad bezeichnet wird, kann dieses dennoch baugleich mit dem Planetenrad ausgeführt sein, sodass der Herstellungsaufwand durch die insofern baugleiche Ausgleichswelle reduziert ist.

Ein Planetenrad wird einerseits durch das Sonnenrad und andererseits durch das Hohlrad mit den anderen Planeten in der Drehrichtung synchronisiert. Bei einem vollständigen Massenausgleich zweiter Ordnung eines vierzylindrigen Motors muss für eine der beiden Ausgleichswellen eine Drehrichtungsumkehr erfolgen, was beispielsweise durch ein Zwischenrad oder mittels eines Kettentriebs erfolgt. Besonders vorteilhaft ist es hingegen, wenn das zumindest eine Planetenrad auf der Ausgleichswelle angeordnet ist, die in einem Gehäuse des Antriebs drehbeweglich und gehäusefest gelagert ist, sodass also insbesondere ein gesonderter Planetenradträger entfallen kann. Vielmehr ergibt sich die im System des Gehäuses ortsfeste Position des Planetenrads bereits durch die Lagerung der Ausgleichswelle in dem Gehäuse.

Besonders praxisgerecht ist auch eine Ausführungsform des erfindungsgemäßen Antriebs, bei der zumindest eine erste Ausgleichswelle mit derselben Drehrichtung wie die Kurbelwelle und zumindest eine weitere Ausgleichswelle gegenläufig zu der Kurbelwelle antreibbar ist. Hierzu kann beispielsweise ein Planetenrad mit einem Zwischenrad oder Kettentrieb derselben Größe verbunden werden, um so die gewünschte Drehrichtungsänderung zu realisieren.

Bei einer besonders einfachen Ausführungsform der vorliegenden Erfindung stimmen die Anzahl der Zähne der Innenverzahnung und der Außenverzahnung überein, sodass zur Erzielung übereinstimmender Drehzahlen der Ausgleichswellen übereinstimmende Zahnräder bzw. Planetenräder eingesetzt werden können. Selbstverständlich können auch unterschiedliche Zähnezahlen oder mehrere Zahnspuren mit unterschiedlicher Zähnezahl vorgesehen werden. Weiterhin kann auch eine Schräg- oder Stirnverzahnung in vorteilhafter Weise realisiert werden. Insbesondere könnte eine einzige Schrägverzahnung des Hohlrads zum gegensinnigen Antrieb des Planetenrads gegenüber dem Zahnrad allein durch die unterschiedliche Geometrie der Planetenräder mit einer einzigen Verzahnung realisiert werden.

Weiterhin erweist es sich als besonders vorteilhaft, wenn die Außenverzahnung und/oder die Innenverzahnung mit weiteren Zahnrädern bzw. Planetenrädern zum Antrieb eines Aggregats und/oder einer Nockenwelle kämmend angeordnet sind. Auf diese Weise können insbesondere mittels der Außenverzahnung problemlos ebenso weitere Aggregate wie auch beispielsweise eine oder mehrere Nockenwellen angetrieben werden, wobei sich die Erfindung neben der vergleichsweise einfachen konstruktiven Umsetzung insbesondere auch durch die hohe Betriebssicherheit auszeichnet.

Das Hohlrad kann nahezu beliebige Aggregate, beispielsweise einen Klimakompressor, mit der gewünschten Antriebsleistung der Kurbelwelle verbinden. Umgekehrt erweist sich auch eine Ausgestaltung als besonders Erfolg versprechend, bei welcher das Aggregat als ein Anlasser und/oder als ein elektrisches Antriebsaggregat für einen Fahrantrieb ausgeführt ist, sodass mittels des Planetengetriebes eine zusätzliche Antriebsleistung auf die Kurbelwelle übertragen werden kann, die beispielsweise einen kombinierten Antrieb durch das elektrische Antriebsaggregat und die Kolbenmaschine oder einen reinen elektrischen Antrieb ermöglicht.

Dabei hat es sich bereits als besonders zweckmäßig erwiesen, wenn das Übersetzungsverhältnis zwischen dem mit der Kurbelwelle verbundenen Sonnenrad und dem Hohlrad 1:0,5 und/oder zwischen dem mit der Kurbelwelle verbundenen Sonnenrad und dem zumindest einen Planetenrad 1:2 beträgt.

Bei einer anderen, ebenfalls besonders gewinnbringenden Ausführungsform, bei der zumindest zwei Ausgleichswellen in verschiedenen, zueinander beabstandeten horizontalen Ebenen angeordnet sind, weisen die Ausgleichswellen einen Höhenversatz auf, welcher zu einem Drehmoment führt, das dem aus der Gaskraft resultierenden Wechseldrehmoment entgegenwirkt. Es ist leicht nachvollziehbar, dass der Höhenversatz durch die nahezu beliebige Anordnung der Ausgleichswellen am Umfang des Hohlrads in optimaler Weise ausgewählt und problemlos realisiert werden kann.

Das Planetengetriebe lässt sich mit einer unterschiedlichen Anzahl von Planetenrädern realisieren, wobei auch Bauformen mit lediglich einem einzigen Planetenrad denkbar sind. Besonders sinnvoll ist es hingegen, wenn das Hohlrad zum Ausgleich von aus Drehungleichförmigkeiten resultierenden Wechselmomenten der Kolbenmaschine mit einer veränderbaren Masse und/oder Massenverteilung ausgestattet ist. Hierdurch können die unerwünschten Masseeffekte der angeschlossenen Aggregate, aber auch eine gegebenenfalls asymmetrische Verteilung der Planetenräder und Zahnräder ausgeglichen werden.

Die Aufgabe wird weiterhin noch mit einer Verwendung einer für einen Antrieb bestimmten Einrichtung zum Antrieb mehrerer Ausgleichswellen zum Ausgleich bzw. zur Reduzierung von Wechselmomenten dadurch gelöst, dass die Einrichtung ein Planetengetriebe, umfassend zumindest ein Planetenrad, ein Sonnenrad sowie ein Hohlrad mit einer Innenverzahnung für ein die erste Ausgleichswelle antreibendes Planetenrad und mit einer Außenverzahnung für ein die zweite Ausgleichswelle antreibendes Zahnrad aufweist. Hierdurch wird in überraschend einfacher Weise der Antrieb der Ausgleichswellen und gegebenenfalls weiterer anzutreibender Wellen und Aggregate ermöglicht, wobei die Drehrichtung allein durch den kämmenden Eingriff in die Innen- oder Außenverzahnung wählbar und bestimmbar ist, die hierzu eine vorzugsweise übereinstimmende Anzahl von Zähnen aufweisen. Dabei ist die Einrichtung nicht auf die integrale Anordnung in der Kolbenmaschine, insbesondere einer Brennkraftmaschine eines Fahrzeugs beschränkt, sondern kann ebenso in nachgeordneten Abschnitten des Antriebsstrangs eingesetzt werden.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung wesentlicher Funktionselemente in
- Fig. 1: eine perspektivische Darstellung des Antriebs;
- Fig. 2: eine Vorderansicht des in Figur 1 gezeigten Antriebs.

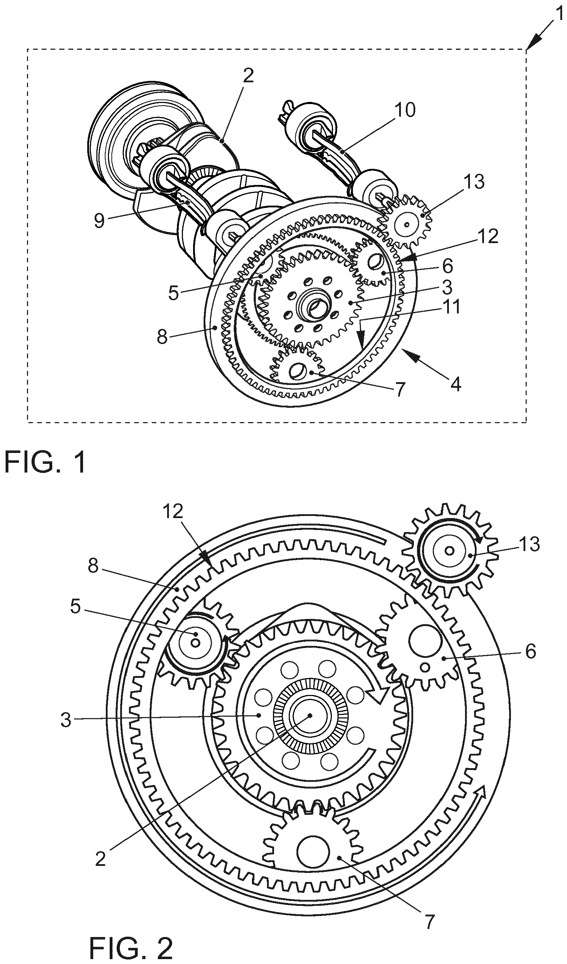

Der erfindungsgemäße Antrieb 1 wird nachstehend anhand der Figuren 1 und 2 näher erläutert, in denen wesentliche Komponenten einer Brennkraftmaschine des für ein Kraftfahrzeug bestimmten Antriebs 1 zu erkennen sind. Wesentlicher Aspekt der Erfindung ist die Reduzierung von Wechselmomenten aufgrund der Drehzahl- und Momentenpulsation der Brennkraftmaschine sowie der durch die Hubbewegung der Kolben und Pleuel im Betrieb auftretenden Massenkräfte. Zu diesem Zweck trägt eine Kurbelwelle 2 der Brennkraftmaschine ein Sonnenrad 3 eines Planetengetriebes 4. In an sich bekannter Weise umfasst das Planetengetriebe 4 weiterhin drei Planetenräder 5, 6, 7 sowie ein Hohlrad 8. In der gezeigten Ausführungsform dient das Planetenrad 5 dem Antrieb einer Ausgleichswelle 9, die dadurch gegensinnig antreibbar ist. Um zusätzlich zu dieser Ausgleichswelle 9 auch eine weitere Ausgleichswelle 10 mit derselben Drehrichtung wie die Kurbelwelle 2 antreiben zu können, hat das Hohlrad 8 zusätzlich zu einer mit den Planetenrädern 5, 6, 7 kämmenden Innenverzahnung 11 eine Außenverzahnung 12 für ein die zweite Ausgleichswelle 10 antreibendes Zahnrad 13, wobei die Anzahl der Zähne der Innenverzahnung 11 und der Außenverzahnung 12 übereinstimmen. Dabei wird ein Übersetzungsverhältnis zwischen dem Sonnenrad 3 der Kurbelwelle 2 und dem Planetenrad 5 bzw. dem Zahnrad 13 von 1:2 erreicht. Weiterhin wird in vorteilhafter Weise ein vertikaler Versatz der Ausgleichswellen 9, 10 geschaffen, welcher ein Wechseldrehmoment erzeugt, das dem im Betrieb durch die Gaskraft entstehenden Wechseldrehmoment entgegenwirkt.

### Bezugszeichenliste

- 1: Antrieb
- 2: Kurbelwelle
- 3: Sonnenrad
- 4: Planetengetriebe
- 5: Planetenrad
- 6: Planetenrad
- 7: Planetenrad
- 8: Hohlrad
- 9: Ausgleichswelle
- 10: Ausgleichswelle
- 11: Innenverzahnung
- 12: Außenverzahnung
- 13: Zahnrad

## Patentansprüche

1. Ein eine insbesondere als Brennkraftmaschine ausgeführte Kolbenmaschine umfassender Antrieb (1) mit einer Kurbelwelle (2) und mit zumindest zwei mittels eines Planetengetriebes (4) umfassend ein Sonnenrad (3), ein Hohlrad (8) sowie zumindest ein Planetenrad (5, 6, 7) antreibbaren Ausgleichswellen (9, 10) der Kolbenmaschine, wobei die Kurbelwelle (2) mit dem Sonnenrad (3) verbunden ist und wobei zumindest eine Ausgleichswelle (9) mittels zumindest eines Planetenrads (5) durch die Kurbelwelle (2) antreibbar ausgeführt ist, wobei das Hohlrad (8) mit einer Innenverzahnung (11) für ein die erste Ausgleichswelle (9) antreibendes Planetenrad (5) und mit einer Außenverzahnung (12) für ein die zweite Ausgleichswelle (10) antreibendes Zahnrad (13) ausgestattet ist.

2. Antrieb (1) nach Anspruch 1, **dadurch gekennzeichnet, dass** das zumindest eine Planetenrad (5) auf der Ausgleichswelle (9) angeordnet ist, die in einem Gehäuse des Antriebs (1) drehbeweglich gelagert ist.

3. Antrieb (1) nach den Ansprüchen 1 oder 2, **dadurch gekennzeichnet, dass** zumindest eine Ausgleichswelle (10) mit derselben Drehrichtung wie die Kurbelwelle (2) und zumindest eine weitere Ausgleichswelle (9) gegenläufig zu der Kurbelwelle (2) antreibbar ist.

4. Antrieb (1) nach Anspruch 3, **dadurch gekennzeichnet, dass** die Anzahl der Zähne der Innenverzahnung (11) und der Außenverzahnung (12) übereinstimmen.

5. Antrieb (1) nach Anspruch 3 oder 4, **dadurch gekennzeichnet, dass** die Außenverzahnung (12) und/oder die Innenverzahnung (11) mit weiteren Zahnrädern bzw. Planetenrädern zum Antrieb eines Aggregats und/oder einer Nockenwelle kämmend angeordnet sind.

6. Antrieb (1) nach Anspruch 5, **dadurch gekennzeichnet, dass** das Aggregat als ein Anlasser und/oder als ein elektrisches Antriebsaggregat für einen Fahrantrieb ausgeführt ist.

7. Antrieb (1) nach zumindest einem der vorangehenden Ansprüche, **dadurch gekennzeichnet, dass** das Übersetzungsverhältnis zwischen dem mit der Kurbelwelle (2) verbundenen Sonnenrad (3) und dem Hohlrad (8) 1:0,5 und/oder zwischen dem mit der Kurbelwelle (2) verbundenen Sonnenrad (3) und dem zumindest einen Planetenrad (5) 1:2 beträgt.

8. Antrieb (1) nach zumindest einem der vorangehenden Ansprüche, **dadurch gekennzeichnet, dass** zumindest zwei Ausgleichswellen (9, 10) in verschiedenen, zueinander beabstandeten horizontalen Ebenen angeordnet sind.

9. Verwendung einer für einen Antrieb (1) nach zumindest einem der vorangehenden Ansprüche bestimmten Einrichtung zum Antreiben mehrerer Ausgleichswellen (9, 10) zum Ausgleich bzw. zur Reduzierung von Wechselmomenten, **dadurch gekennzeichnet, dass** die Einrichtung ein Planetengetriebe (4) umfassend zumindest ein Planetenrad (5, 6, 7), ein Sonnenrad (3) sowie ein Hohlrad (8) mit einer Innenverzahnung (11) für ein die erste Ausgleichswelle (9) antreibendes Planetenrad (5) und mit einer Außenverzahnung (12) für ein die zweite Ausgleichswelle (10) antreibendes Zahnrad (13) aufweist.

## Claims

1. Drive (1) comprising a piston engine which is configured, in particular, as an internal combustion engine, having a crankshaft (2) and having at least two balancing shafts (9, 10) of the piston engine, which balancing shafts (9, 10) can be driven by means of a planetary transmission (4) comprising a sun gear (3), an internal gear (8) and at least one planetary gear (5, 6, 7), the crankshaft (2) being connected to the sun gear (3), and at least one balancing shaft (9) being configured such that it can be driven by way of the crankshaft (2) by means of at least one planetary gear (5), the internal gear (8) being equipped with an internal toothing system (11) for a planetary gear (5) which drives the first balancing shaft (9) and with an external toothing system (12) for a gearwheel (13) which drives the second balancing shaft (10).

2. Drive (1) according to Claim 1, **characterized in that** the at least one planetary gear (5) is arranged on the balancing shaft (9) which is mounted in a rotationally movable manner in a housing of the drive (1) .

3. Drive (1) according to Claim 1 or 2, **characterized in that** at least one balancing shaft (10) can be driven in the same rotational direction as the crankshaft (2), and at least one further balancing shaft (9) can be driven in an opposite direction to the crankshaft (2).

4. Drive (1) according to Claim 3, **characterized in that** the numbers of teeth of the internal toothing system (11) and of the external toothing system (12) correspond to one another.

5. Drive (1) according to Claim 3 or 4, **characterized in that** the external toothing system (12) and/or the internal toothing system (11) are/is arranged so as to mesh with further gearwheels or planetary gears for driving a unit and/or a camshaft.

6. Drive (1) according to Claim 5, **characterized in that** the unit is configured as a starter and/or as an electric drive unit for a propulsion drive.

7. Drive (1) according to at least one of the preceding claims, **characterized in that** the transmission ratio between the sun gear (3) which is connected to the crankshaft (2) and the internal gear (8) is 1:0.5 and/or between the sun gear (3) which is connected to the crankshaft (2) and the at least one planetary gear (5) is 1:2.

8. Drive according to at least one of the preceding claims, **characterized in that** at least two balancing shafts (9, 10) are arranged in different horizontal planes which are spaced apart from one another.

9. Use of a device, which is intended for a drive (1) according to at least one of the preceding claims, for driving a plurality of balancing shafts (9, 10) for balancing and/or for reducing alternating torques, **characterized in that** the device has a planetary transmission (4) comprising at least one planetary gear (5, 6, 7), a sun gear (3) and an internal gear (8) with an internal toothing system (11) for a planetary gear (5) which drives the first balancing shaft (9) and with an external toothing system (12) for a gearwheel (13) which drives the second balancing shaft (10).

## Revendications

1. Moteur à pistons réalisé en particulier sous forme de moteur à combustion interne, comportant un entraînement (1) doté d'un vilebrequin (2) et d'au moins deux arbres d'équilibrage (9, 10) du moteur à pistons, lesquels peuvent être entraînés au moyen d'une transmission planétaire (4) comportant un pignon planétaire (3), une couronne (8) ainsi qu'au moins un pignon satellite (5, 6, 7), le vilebrequin (2) étant relié au pignon planétaire (3), et au moins un arbre d'équilibrage (9) étant réalisé de manière à pouvoir être entraîné par le vilebrequin (2) au moyen d'au moins un pignon satellite (5), la couronne (8) étant dotée d'une denture intérieure (11) pour un pignon satellite (5) entraînant le premier arbre d'équilibrage (9) et d'une denture extérieure (12) pour une roue dentée (13) entraînant le deuxième arbre d'équilibrage (10).

2. Entraînement (1) selon la revendication 1, **caractérisé en ce qu'**au moins un pignon satellite (5) est disposé sur l'arbre d'équilibrage (9) qui est monté de manière mobile en rotation dans un carter de l'entraînement (1).

3. Entraînement (1) selon la revendication 1 ou 2, **caractérisé en ce qu'**au moins un arbre d'équilibrage (10) peut être entraîné dans le même sens de rotation que le vilebrequin (2) et au moins un autre arbre d'équilibrage (9) peut être entraîné en sens contraire au vilebrequin (2).

4. Entraînement (1) selon la revendication 3, **caractérisé en ce que** les nombres de dents de la denture intérieure (11) et de la denture extérieure (12) coïncident.

5. Entraînement (1) selon la revendication 3 ou 4, **caractérisé en ce que** la denture extérieure (12) et/ou la denture intérieure (11) sont disposées de manière à s'engrener avec d'autres roues dentées ou pignons satellites pour l'entraînement d'un groupe et/ou d'un arbre à cames.

6. Entraînement (1) selon la revendication 5, **caractérisé en ce que** le groupe est réalisé sous la forme d'un démarreur et/ou d'un groupe motopropulseur électrique pour un système d'entraînement.

7. Entraînement (1) selon au moins l'une quelconque des revendications précédentes, **caractérisé en ce que** le rapport de transmission entre le pignon planétaire (3) relié au vilebrequin (2) et la couronne (8) est de 1:0,5 et/ou le rapport de transmission entre le pignon planétaire (3) relié au vilebrequin (2) et ledit au moins un pignon satellite (5) est de 1:2.

8. Entraînement (1) selon au moins l'une quelconque des revendications précédentes, **caractérisé en ce qu'**au moins deux arbres d'équilibrage (9, 10) sont disposés dans différents plans horizontaux espacés les uns des autres.

9. Utilisation d'un système destiné à un entraînement (1) selon au moins l'une quelconque des revendications précédentes pour l'entraînement de plusieurs arbres d'équilibrage (9, 10) servant à l'équilibrage ou à la réduction de couples alternants, **caractérisée en ce que** le système comprend une transmission planétaire (4) comportant au moins un pignon satellite (5, 6, 7), un pignon planétaire (3) ainsi qu'une couronne (8) dotée d'une denture intérieure (11) pour un pignon satellite (5) entraînant le premier arbre d'équilibrage (9) et d'une denture extérieure (12) pour une roue dentée (13) entraînant le deuxième arbre d'équilibrage (10).
